# EUROPÄISCHE PATENTANMELDUNG

(11) **EP 4 177 135 A1**
(43) Veröffentlichungstag der Anmeldung: **10.05.2023**
(21) Anmeldenummer: 22190470.9
(22) Anmeldetag: 16.08.2022
(51) Int. Cl.: B62D 7/14, B62D 7/15

(54) **LENKSYSTEM FÜR EIN LANDWIRTSCHAFTLICHES ARBEITSFAHRZEUG**

(30) Priorität: 09.11.2021 DE 102021129151
(71) Anmelder: CLAAS Selbstfahrende Erntemaschinen GmbH, 33428 Harsewinkel (DE)
(72) Erfinder: Selbach, Rainer, 33378 Rheda-Wiedenbrück (DE); Gausmann, Ludger, 49170 Hagen a.T. (DE)
(74) Vertreter: CLAAS Gruppe

(57) **Zusammenfassung**

Die vorliegende Erfindung betrifft ein Lenksystem (7) für ein landwirtschaftliches Arbeitsfahrzeug (1, 2), umfassend zumindest zwei lenkbare Fahrzeugachsen (3, 4), die jeweils zumindest einen Lenkzylinder (8, 9) zur Lenkung von an den Fahrzeugachsen (3, 4) angeordneten Bodeneingriffsmittel (5) aufweisen, wobei die primär zu lenkende Fahrzeugachse (3) durch ein Orbitrol (10) gesteuert ist und die zumindest eine weitere lenkbare Fahrzeugachse (4) durch eine elektrohydraulische Lenkvorrichtung (11), wobei die elektrohydraulische Lenkvorrichtung (11) der zumindest einen weiteren lenkbaren Fahrzeugachse (4) redundant ausgeführt ist.

## Beschreibung

Die vorliegende Erfindung betrifft ein Lenksystem für ein landwirtschaftliches Arbeitsfahrzeug gemäß dem Oberbegriff des Anspruches 1.

Zur Erhöhung der Wendigkeit eines landwirtschaftlichen Arbeitsfahrzeugs, insbesondere einem Traktor oder einer selbstfahrenden Erntemaschine, kann mit mehr als einer Fahrzeugachse gelenkt werden. Reicht bei diesen mehrachsgelenkten Arbeitsfahrzeugen beim Betreiben auf der Straße die Wendigkeit einer gelenkten Fahrzeugachse aus, um den gesetzlichen Anforderungen an den Wendekreisdurchmesser zu genügen, wird hier für die Straßenfahrt die weitere lenkbare Fahrzeugachse in einer Mittenposition gesperrt. Die primär zu lenkende Fahrzeugachse wird auf der Straße entweder mechanisch oder hydraulisch gelenkt. Bei hydraulischen Lenksystemen gilt bis zu einer Höchstgeschwindigkeit von 62 km/h die einkanalige Ausführung mit einem Orbitrol als eine Lenkvorrichtung als betriebsbewährt und sicher. An die Ausführung der Lenkvorrichtung der weiteren zu lenkenden Fahrzeugachse brauchen in diesem Fall keine hohen Anforderungen gestellt werden, da diese bei Straßenfahrt in der Mittenposition zentriert festgestellt ist. Kann aufgrund des konstruktiv möglichen Lenkeinschlags an der primär zu lenkenden Fahrzeugachse der für die Straßenfahrt vorgeschriebene Wendekreisdurchmesser nicht eingehalten werden, so ist es erforderlich, auch die weitere lenkbare Fahrzeugachse bei der Straßenfahrt mitlenken zu lassen. Dies führt jedoch bei der Ausführung der Lenkvorrichtung der weiteren zu lenkenden Fahrzeugachse zu hohen Sicherheitsanforderungen. Wenn die Lenkvorrichtung der weiteren zu lenkenden Fahrzeugachse elektrisch bzw. elektronisch realisiert ist, muss dazu eine Lenkbarkeit auch bei Ausfall der Elektrik bzw. der Elektronik gewährleistet sein. Zur Realisierung von drei unterschiedlichen Betriebsmodi, einem Betriebsmodus, welcher das vollelektronische Lenken bei der (Feld-) Arbeit, einem weiteren Betriebsmodus, welcher das hydraulische Lenken per Orbitrol auf der Straße der weiteren zu lenkenden Fahrzeugachse ermöglicht, und einem Betriebsmodus, welcher eine vollhydraulische Rückfallebene zur Lenkung der lenkbaren Fahrzeugachsen bei einem Ausfall der Elektrik und/oder Elektronik ermöglicht, werden viele Schaltventile benötigt, welche das Lenksystem aufwendig und kostenintensiv machen.

Hingegen können bei einem elektronischen Lenksystem, welches als Steer-by-wire-Lenksystem ausgeführt einen Lenkbefehl von einem Sensor wie einem Lenkrad über ein Steuergerät ausschließlich elektrisch zu einem elektromechanischen Aktor weiterleitet, welcher den Lenkbefehl ausführt, auf die für den Betriebsmodus der vollhydraulische Rückfallebene auf diese Schaltventile verzichtet werden. Jedoch sind hohe Anforderungen an die für die Sicherheit bei der Straßenfahrt erforderliche Redundanz bei den elektromechanischen Aktoren und die zum Erreichen des Ziels "Fail operational", d.h., dass das Lenksystem im Fehlerfall weiterarbeitet, erforderlichen Komponenten, was das Vorhandensein von mindestens drei unabhängigen Sensoreinrichtungen Kanälen für jeden benötigten Messwert des Lenksystems erfordert, zu erfüllen. Neben dieser Redundanz führen auch die Anforderungen an die Hardware und Softwareentwicklung zu einem zusätzlichen erhöhten Aufwand.

Aus der EP 0 872 407 A1 ist ein Lenksystem gemäß dem Oberbegriff des Anspruches 1 bekannt.

Der Erfindung liegt die Aufgabe zugrunde, ein Lenksystem für ein landwirtschaftliches Arbeitsfahrzeug der eingangs genannten Art, insbesondere einen Traktor oder eine selbstfahrende Erntemaschine, weiterzubilden, welches einerseits die gesetzlichen Anforderungen an das Lenkverhalten eines zumindest zwei lenkbare Fahrzeugachsen aufweisenden Arbeitsfahrzeugs, wie die Einhaltung eines für die Straßenfahrt vorgeschriebenen Wendekreisdurchmessers, sicherstellt und zudem auch eine kosteneffiziente Struktur des Lenksystems ermöglicht.

Die Aufgabe wird gelöst durch ein Lenksystem für ein landwirtschaftliches Arbeitsfahrzeug mit den Merkmalen des unabhängigen Patentanspruchs 1. Vorteilhafte Ausführungsformen und Weiterbildungen sind den hiervon abhängigen Ansprüchen zu entnehmen.

Gemäß dem Anspruch 1 wird ein Lenksystem für ein landwirtschaftliches Arbeitsfahrzeug vorgeschlagen, umfassend zumindest zwei lenkbare Fahrzeugachsen, die jeweils zumindest einen Lenkzylinder zur Lenkung von an den Fahrzeugachsen angeordneten Bodeneingriffsmitteln aufweisen, wobei die primär zu lenkende Fahrzeugachse durch ein Orbitrol gesteuert ist und die zumindest eine weitere lenkbare Fahrzeugachse durch eine elektrohydraulische Lenkvorrichtung. Erfindungsgemäß ist vorgesehen, dass die elektrohydraulische Lenkvorrichtung der zumindest einen weiteren lenkbaren Fahrzeugachse redundant ausgeführt ist.

Die Verwendung des Orbitrols zur Ansteuerung des zumindest einen Lenkzylinders zur Lenkung der primär zu lenkenden Fahrzeugachse in Kombination mit der elektrohydraulischen Lenkvorrichtung zur Lenkung der weiteren Fahrzeugachse, wobei die elektrohydraulische Lenkvorrichtung der zumindest einen weiteren lenkbaren Fahrzeugachse redundant ausgeführt ist, werden gegenüber einem hydraulischen Lenksystem oder einem elektronischen Lenksystem, einem Steer-by-wire-System, die für Betriebssicherheit notwendigen Aufwendungen reduziert. Die elektrohydraulische Lenkvorrichtung ist dazu eingerichtet, die weitere Fahrzeugachse zumindest nachzulenken.

In Abhängigkeit vom Fahrzeugkonzept, welches an dem landwirtschaftlichen Arbeitsfahrzeug umgesetzt ist, kann die primär zu lenkende Fahrzeugachse, welche durch das Orbitrol angesteuert wird, die Vorderachse oder die Hinterachse sein. Das landwirtschaftliche Arbeitsfahrzeug weist einen für einen Allradbetrieb ausgelegten Antriebsstrang auf.

Die Bodeneingriffsmittel können als Räder und/oder als Raupen ausgebildet sein.

Insbesondere kann die elektrohydraulische Lenkvorrichtung aus zwei redundanten hydraulischen Systemen bestehen, welche vom Orbitrol hydraulisch unabhängig sind. Unter der hydraulischen Unabhängigkeit ist dabei zu verstehen, dass die Ansteuerung des zumindest einen Lenkzylinders der weiteren lenkbaren Fahrzeugachse unabhängig von der hydraulischen Ansteuerung des Orbitrols beispielsweise durch eine Betätigung des Lenkrades des Arbeitsfahrzeugs erfolgt.

Gemäß einer Weiterbildung können zumindest zwei redundant arbeitende Hydraulikpumpen zur Versorgung von Orbitrol und der elektrohydraulischen Lenkvorrichtung vorgesehen sein. Dabei ist vorgesehen, dass das Orbitrol von einer als Hauptlenkpumpe ausgeführten Hydraulikpumpe und einer als Notlenkpumpe ausgeführten Hydraulikpumpe hydraulische mit Öl versorgt wird. Zudem versorgen Hauptlenkpumpe als auch die Notlenkpumpe die aus den zwei redundanten hydraulischen Systemen bestehende elektrohydraulische Lenkvorrichtung der weiteren zu lenkenden Fahrzeugachse.

Dabei können die hydraulischen Systeme jeweils eine Proportionaleinheit und eine nachgeschaltete Sperreinheit zur Beaufschlagung des zumindest einen Lenkzylinders der zumindest einen weiteren lenkbaren Fahrzeugachse umfassen.

Weiterhin können zur Ansteuerung der hydraulischen Systeme zumindest drei unabhängige Steuereinheiten vorgesehen sein, von denen zwei Steuereinheiten das eine hydraulische System ansteuern und die zumindest eine weitere Steuereinheit das andere hydraulische System der elektrohydraulischen Lenkvorrichtung ansteuert. Die zumindest drei Steuereinheiten steuern die beiden hydraulischen Systeme elektrisch und/oder elektronisch. Das Vorsehen von zumindest drei voneinander unabhängigen Steuereinheiten ist für den "Fail operational"-Betrieb erforderlich. Bevorzugt können vier unabhängige Steuereinheiten zur Anwendung kommen.

Die Komponenten des jeweiligen hydraulischen Systems, d.h. die Proportionaleinheit und die nachgeschaltete Sperreinheit, können in separaten Gehäusen oder in einem gemeinsamen Gehäuse zusammengefasst sein. Des Weiteren können die dem jeweiligen hydraulischen System zugehörigen Steuereinheiten in unterschiedlichen Modulgehäusen angeordnet sein.

Die Anordnung der dem jeweiligen hydraulischen System zugehörigen Steuereinheiten in unterschiedlichen Modulgehäusen ist vorteilhaft, um die zumindest drei unabhängigen Steuereinheiten mit zumindest zwei unabhängigen Spannungsquellen verbinden zu können. Die zumindest drei unabhängigen Steuereinheiten regeln den Lenkwinkel der weiteren Fahrzeugachse in der jeweiligen Betriebssituation des Arbeitsfahrzeugs, d.h. im Betrieb des Arbeitsfahrzeugs auf dem Feld bzw. abseits der Straße sowie bei Straßenfahrt.

Gemäß einer Weiterbildung können die zumindest zwei lenkbaren Fahrzeugachsen jeweils zumindest drei voneinander unabhängige Winkelsensoreinrichtungen umfassen, wobei die jeweiligen Winkelsensoreinrichtungen dazu eingerichtet sind, einen Istlenkwinkel der durch das Orbitrol gesteuerten Fahrzeugachse sowie einen Istlenkwinkel der durch die elektrohydraulische Lenkvorrichtung gesteuerten zumindest einen weiteren lenkbaren Fahrzeugachse zu erfassen.

Hierbei können die Steuereinheiten zur Bestimmung eines einzustellenden Solllenkwinkels der zumindest einen weiteren lenkbaren Fahrzeugachse in Abhängigkeit von dem bestimmten Istlenkwinkel der durch das Orbitrol gesteuerten Fahrzeugachse eingerichtet sein. Die Steuereinheiten können über wenigstens eine in diesen hinterlegte Kennlinie den Solllenkwinkel der weiteren lenkbaren Fahrzeugachse aus dem bestimmten Istlenkwinkel der durch das Orbitrol gesteuerten Fahrzeugachse ableiten. So können die Winkelsensoreinrichtungen der durch das Orbitrol gesteuerten Fahrzeugachse an die Steuereinheiten der weiteren lenkbaren Fahrzeugachse angeschlossen sein. Die Steuereinheiten der weiteren lenkbaren Fahrzeugachse können die von den Winkelsensoreinrichtungen der durch das Orbitrol gesteuerten Fahrzeugachse empfangenen Signale verwenden, um daraus einen Solllenkwinkel der zumindest einen weiteren lenkbaren Fahrzeugachse zu berechnen.

Vorteilhaft ist es, wenn die Steuereinheiten der hydraulischen Systeme untereinander durch ein Kommunikationsmittel verbunden sind. Das Kommunikationsmittel kann ein Bussystem sein, welches einen bidirektionalen Datenaustausch der Steuereinheiten der hydraulischen Systeme untereinander ermöglicht. Hierbei können die Steuereinheiten ihre Messwerte zur Plausibilisierung untereinander austauschen.

Gemäß einer Weiterbildung können die Steuereinheiten der hydraulischen Systeme mit einem übergeordneten Antriebsstrangsteuergerät durch ein Kommunikationsmittel verbunden sein. Bei dem Kommunikationsmittel kann es sich insbesondere um das Bussystem handeln, welches die Steuereinheiten untereinander verbindet. Die Anbindung der Steuereinheiten der hydraulischen Systeme an das übergeordnete Antriebsstrangsteuergerät hat den Vorteil, dass zusätzliche Fahrdaten bereitgestellt werden können. Insbesondere sind die Steuereinheiten der hydraulischen Systeme zum Empfang von Fahrgeschwindigkeitsinformationen eingerichtet. Die Steuereinheiten der hydraulischen Systeme können dazu eingerichtet sein, die Fahrgeschwindigkeitsinformationen Maßnahmen zur Erhöhung der Fahrstabilität zu nutzen. Als wesentliche Maßnahme zur Erhöhung der Fahrstabilität kann eine Limitierung des maximalen Lenkwinkels an der weiteren lenkbaren Fahrzeugachse in Abhängigkeit von der Fahrgeschwindigkeit vorgesehen sein. So können die Steuereinheiten dazu eingerichtet sein, einen die Fahrstabilität berücksichtigenden Maximalwert für den Solllenkwinkel für die durch die elektrohydraulische Lenkvorrichtung gesteuerte weitere lenkbare Fahrzeugachse zu berechnen. Dabei werden fahrgeschwindigkeitsabhängig die Einschlagswinkel der Bodeneingriffsmittel der weiteren lenkbaren Fahrzeugachse begrenzt. Durch das Lenken der primär zu lenkenden Fahrzeugachse per Orbitrol lässt sich das Arbeitsfahrzeug bis zu einer Höchstgeschwindigkeit von 62 km/h ohne aufwändigen Nachweis sicher betreiben. Die weitere lenkbare Fahrzeugachse kann aufgrund des redundanten Aufbaus der elektrohydraulischen Lenkvorrichtung bei Auftreten eines Fehlers die geforderte Zeit lang weiterlenken.

Weiterhin können die Steuereinheiten der hydraulischen Systeme durch ein Kommunikationsmittel unmittelbar mit einer Fahrgeschwindigkeitsbestimmungsvorrichtung verbunden sein. Die Fahrgeschwindigkeitsbestimmungsvorrichtung kann als ein Drehzahlsensor ausgeführt sein. Beispielweise kann der Drehzahlsensor eine Abtriebsdrehzahl am Getriebeausgang erfassen, welche über das Kommunikationsmittel an die Steuereinheiten zur Auswertung übertragen wird.

Vorzugsweise kann das Antriebsstrangsteuergerät dazu eingerichtet sein, im Falle eines Fehlers im Lenksystem die Fahrgeschwindigkeit zu limitieren, so dass die Fahrstabilität auch im Fehlerfall gewährleistet ist.

Gemäß einer bevorzugten Weiterbildung kann der durch das Orbitrol gesteuerten Fahrzeugachse ein Hydrauliksystem zur automatischen Lenkung zugeordnet sein. Diese Weiterbildung ermöglicht es, das landwirtschaftliche Arbeitsfahrzeug abseits öffentlicher Straßen auf einem zu bearbeitenden Feld automatisch zu lenken. Hierzu kann das Antriebsstrangsteuergerät zum Empfang von Daten eines Routenplanungssystems und/oder eines automatischen Spurführungssystems eingerichtet sein.

Hierbei kann das Hydrauliksystem eine Proportionaleinheit und eine Sperreinheit umfassen, zu deren Ansteuerung zwei voneinander unabhängige Steuereinheiten vorgesehen sind, wobei die zwei unabhängigen Steuereinheiten als separate Steuereinheiten des Hydrauliksystems der durch das Orbitrol gesteuerten Fahrzeugachse oder als eine der Steuereinheiten zumindest eines der hydraulischen Systeme der elektrohydraulischen Lenkvorrichtung ausgeführt sein können. Das hydraulische System wird von den beiden einander überwachenden Steuereinheiten geregelt. Diese können in einem gemeinsamen Modulgehäuse untergebracht sein. Die beiden Steuereinheiten des Hydrauliksystems sind wie die anderen Steuereinheiten durch ein Kommunikationsmittel, insbesondere ein gemeinsames Bussystem, eingebunden und erhalten hierüber ihre Stellbefehle für die automatische Spurführung. Alternativ können zur Regelung die Steuereinheiten zumindest eines der hydraulischen Systeme der elektrohydraulischen Lenkvorrichtung eingesetzt werden. Gemäß dieser Ausführungsform des Lenksystems ist zur automatischen Spurführung vorteilhafterweise mindestens eine Winkelsensoreinrichtung der primär zu lenkenden Fahrzeugachse mit den Steuereinheiten des Hydrauliksystems unmittelbar verbunden. Die Messwerte dieser Winkelsensoreinrichtung werden von den Steuereinheiten des Hydrauliksystems über das Kommunikationsmittel an die Steuereinheiten der hydraulischen Systeme der elektrohydraulischen Lenkvorrichtung weitergeleitet.

Gemäß einer Weiterbildung kann vorgesehen sein, dass die Steuereinheiten des Hydrauliksystems zum Empfang und zur Auswertung von Signalen eines mit dem Lenkrad oder Lenkwelle gekoppelten Impulsgebers, einen Lenkradgeber bzw. Drehmelder, eingerichtet ist. Um dem Fahrer den manuellen Eingriff in die Lenkung zurückgeben zu können, empfangen die Steuereinheiten des Hydrauliksystems die Signale des Drehmelders und sensiert damit eine Drehbewegung am Lenkrad. Vorteilhaft ist es, wenn zwei Kanäle des Drehmelders eingelesen, was eine Drehrichtungserkennung ermöglicht. Das Hydrauliksystem ist damit auch prinzipiell in der Lage, die Fördermenge des Orbitrols durch zusätzliches Ölvolumen zu unterstützen. Damit lassen sich variabel einstellbare Lenkübersetzungen zwischen dem Lenkrad und der primär zu lenkenden Fahrzeugachse realisieren.

Weiterhin kann zur Aktivierung bzw. Deaktivierung des Hydrauliksystems ein Betätigungselement, insbesondere ein Straßenfahrschalter, vorgesehen sein. Durch das Betätigen des Betätigungselementes wird vom Betriebsmodus Straßenfahrt auf den Betriebsmodus (Feld-) Arbeitsfahrt umgeschaltet, womit eine Aktivierung des Hydrauliksystems einhergehen kann. Entsprechend wird bei einem Umschalten vom Betriebsmodus (Feld-) Arbeitsfahrt auf Straßenfahrt das Hydrauliksystem deaktiviert.

Gemäß einer bevorzugten Weiterbildung des Lenksystems kann ein Steuerungsmodul vorgesehen sein, welches dazu eingerichtet ist, die Lenkwinkel von der primär zu lenkender Fahrzeugachse und der mindestens einen weiteren zu lenkenden Fahrzeugachse unabhängig voneinander einzustellen. Dabei kann das Steuerungsmodul als eine eigenständige Steuerungsvorrichtung ausgeführt sein, welche über das als Bussystem ausgebildete Kommunikationsmittel mit den weiteren Steuereinheiten des Lenksystems verbunden ist. Alternativ kann das Steuerungsmodul in eine der Steuereinheiten der elektrohydraulischen Lenkvorrichtung oder des Hydrauliksystems der durch das Orbitrol gesteuerten Fahrzeugachse integriert sein.

Des Weiteren kann das Steuerungsmodul mit weiteren Bedienelementen des Lenksystems signaltechnisch verbunden sein. Mittels dieser Bedienelemente lässt sich beispielsweise ein Hundegangwinkel für ein Lenkprogramm "Hundegang" vorgeben, der eine Fortbewegung in Diagonalfahrt ermöglicht. Weitere Lenkprogramme, wie "Schongang", "Synchronlenkung" oder "Fahrhebellenkung" lassen sich mit vollelektronischer Lenkung im (Feld-) Arbeitsmodus darstellen.

Das Steuerungsmodul kann vorteilhafterweise weitere Kanäle eines weiteren Drehmelders einlesen und nutzt die über das Kommunikationsmittel empfangenen Daten der anderen Kanäle des Drehmelders zur Plausibilisierung. Damit sich das Lenkrad im vollelektronischen Lenkmodus bei Erreichen eines Lenkanschlags des Lenkzylinders der primär gelenkten Fahrzeugachse weiterdrehen kann, kann ein Ventilblock zwischen dem Orbitrol und der Fahrzeugachse vorgesehen sein, welcher die Verbindungen in diesem Fall sperrt und dafür den Volumenstrom des Orbitrols kurzschließt. Auch dieser Ventilblock kann in ein gemeinsames Gehäuse des Orbitrols und des Hydrauliksystems integriert sein oder einen eigenen, vom Orbitrol getrennten Block darstellen.

Gemäß einer Weiterbildung können jeder Fahrzeugachse jeweils zwei redundant arbeitende Hydraulikpumpen zugeordnet sein, wobei das jeweilige Hydraulikpumpenpaar der hydraulischen Versorgung jeweils nur einer der lenkbaren Fahrzeugachse dient. Dies ist vorteilhaft in den Fällen, in denen für eine Lenkung mehr Ölvolumen bereitgestellt werden muss, als eine motorgetriebene Hydraulikpumpe als Hauptlenkpumpe sie allein liefern könnte. Dazu kommt ein energetischer Vorteil, weil bei den meisten Lenkmanövern nur eine der beiden Fahrzeugachsen eine hohe Lenkarbeit verrichten muss und nur deren Hydraulikpumpe auf erhöhtem Druckniveau arbeiten muss. Hierbei können zwei kleiner dimensionierte Hydraulikpumpen als Hauptlenkpumpen für die zumindest zwei zu lenkbaren Fahrzeugachsen zum Einsatz kommen.

Die vorliegende Erfindung wird nachstehend anhand von in den Zeichnungen dargestellten Ausführungsbeispielen näher erläutert.

Es zeigen:
- Fig. 1: schematisch eine Darstellung eines landwirtschaftlichen Arbeitsfahrzeugs;
- Fig. 2: schematisch ein Lenksystem des landwirtschaftlichen Arbeitsfahrzeugs gemäß einer ersten Ausführungsform;
- Fig. 3: schematisch ein Lenksystem des landwirtschaftlichen Arbeitsfahrzeugs gemäß einer zweiten Ausführungsform;
- Fig. 4: schematisch ein Lenksystem des landwirtschaftlichen Arbeitsfahrzeugs gemäß einer weiteren Ausführungsform;
- Fig. 5: schematisch ein Lenksystem des landwirtschaftlichen Arbeitsfahrzeugs gemäß einer weiteren Ausführungsform; und
- Fig. 6: schematisch ein Lenksystem des landwirtschaftlichen Arbeitsfahrzeugs gemäß einer weiteren Ausführungsform.

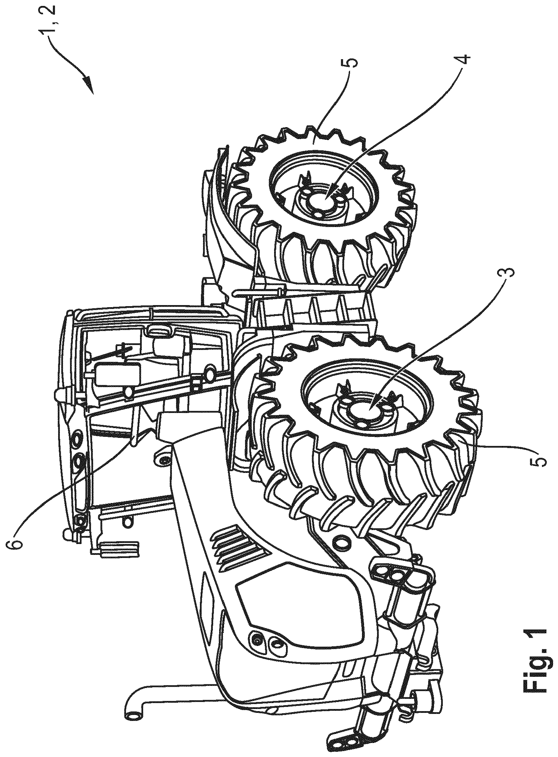

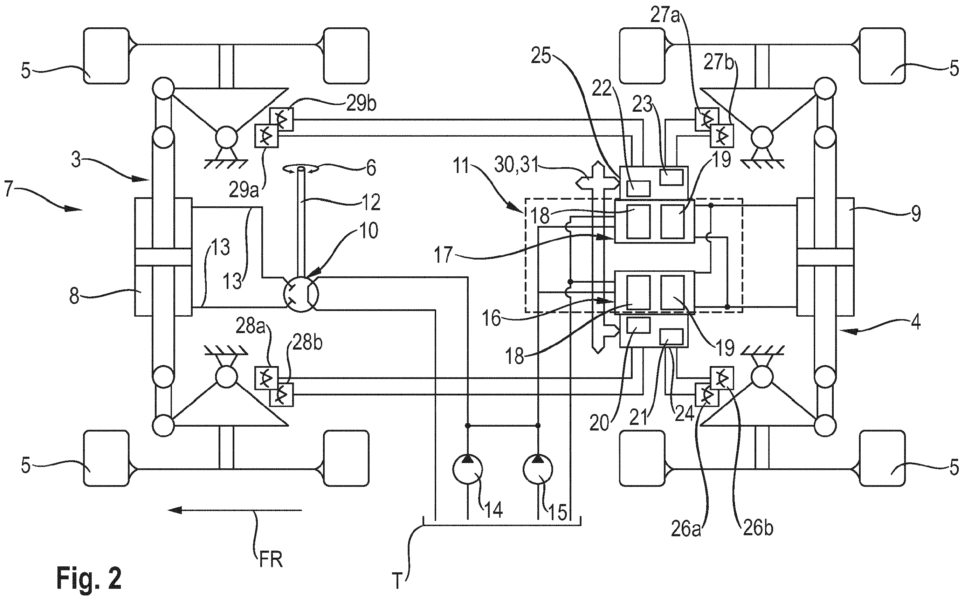

In Fig. 1 ist schematisch eine Darstellung eines für einen Allradbetrieb ausgeführten landwirtschaftlichen Arbeitsfahrzeugs 1 gezeigt. Das landwirtschaftliche Arbeitsfahrzeug 1 ist im dargestellten Ausführungsbeispiel als ein Traktor 2 ausgeführt. Der Traktor 2 weist eine lenkbare Fahrzeugachse 3, hier und vorzugsweise die Vorderachse, und zumindest eine weitere lenkbare Fahrzeugachse 4, hier und vorzugsweise die Hinterachse, auf. An den Fahrzeugachsen 3, 4 sind als Räder ausgeführte Bodeneingriffsmittel 5 angeordnet. Alternativ können anstatt der Räder auch Raupen als Bodeneingriffsmittel 5 an zumindest einer der Fahrzeugachsen 3, 4 vorgesehen sein. Eine von einem in einer Fahrerkabine des Traktors 2 angeordneten Lenkrad 6 erzeugte Lenkbewegung wird sensorisch erfasst, beispielsweise durch einen als Lenkradgeber 41 bzw. Drehmelder ausgeführten Impulsgeber. Der Traktor 2 verfügt über ein Lenksystem 7, welches nachfolgend anhand der Fig. 2 bis 6 beschrieben wird.

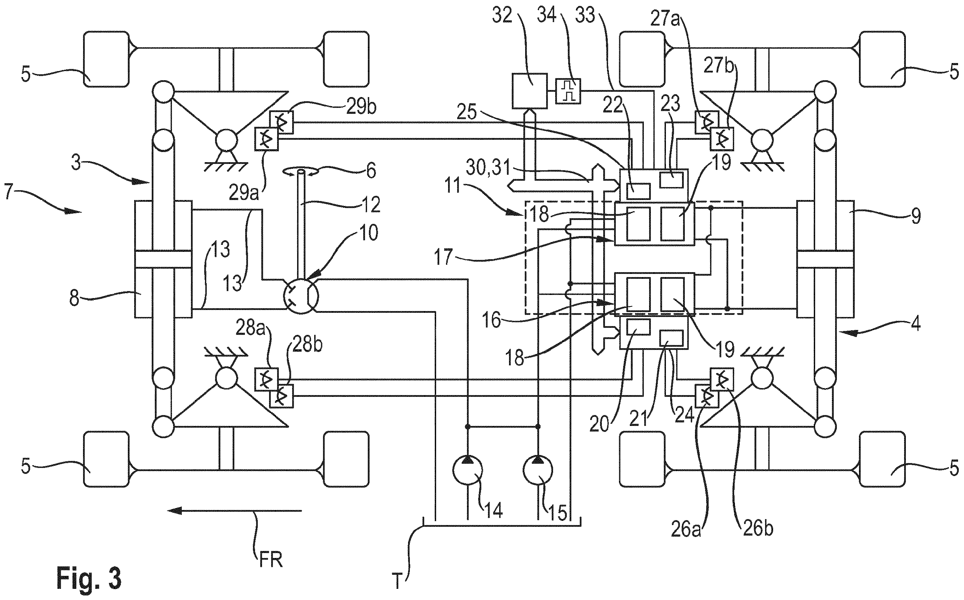

In den nachfolgenden Darstellungen der Figuren 2 bis 6 werden für identische oder funktionsgleiche Bauteile bzw. Komponenten die verwendeten Bezugszeichen beibehalten. Die nachstehend beschriebenen Lenksysteme 7 sind aufeinander aufbauend ausgeführt. In Fig. 2 ist das Grundgerüst des erfindungsgemäßen Lenksystems 7 beschrieben, auf denen die Weiterbildungen gemäß den Fig. 3 bis 6 aufbauen. Sie unterscheiden sich dabei durch eine Erweiterung ihrer Funktionalitäten voneinander.

Fig. 2 zeigt schematisch das Lenksystem 7 des landwirtschaftlichen Arbeitsfahrzeugs 1 gemäß einer ersten Ausführungsform. Die zumindest zwei lenkbaren Fahrzeugachsen 3, 4 weisen jeweils zumindest einen Lenkzylinder 8, 9 zur Lenkung der an den Fahrzeugachsen 3, 4 angeordneten Bodeneingriffsmittel 5 auf, wobei die primär zu lenkende Fahrzeugachse 3 durch ein Orbitrol 10 gesteuert ist und die zumindest eine weitere lenkbare Fahrzeugachse 4 durch eine elektrohydraulische Lenkvorrichtung 11. Das Orbitrol 10 ist durch eine Lenkwelle 12 mit dem Lenkrad 6 verbunden. Das Orbitrol 10 ist durch Hydraulikleitunen 13 mit dem als doppeltwirkenden Hydraulikzylinder ausgeführten Lenkzylinder 8 verbunden. Zur Versorgung des Orbitrols 10 mit Hydrauliköl aus einem Tank T sind eine als Hauptlenkpumpe ausgeführte Hydraulikpumpe 14 sowie eine als Notlenkpumpe ausgeführte weitere Hydraulikpumpe 15 vorgesehen. Die beiden Hydraulikpumpen 14, 15 versorgen darüber hinaus auch die elektrohydraulische Lenkvorrichtung 11 mit Hydrauliköl. Mit dem Pfeil FR ist eine Vorzugsfahrtrichtung des Traktors 2 bezeichnet.

Die elektrohydraulische Lenkvorrichtung 11 der zumindest einen weiteren lenkbaren Fahrzeugachse 4 ist redundant ausgeführt. Hierzu besteht die elektrohydraulische Lenkvorrichtung 11 aus zwei redundanten hydraulischen Systemen 16, 17, welche vom Orbitrol 10 hydraulisch unabhängig sind. Die elektrohydraulische Lenkvorrichtung 11 ist "Fail operational" ausgeführt, d.h. sie arbeitet auch noch bei einem Auftreten eines einzelnen Fehlers, um die Lenkbarkeit des Traktors 2 respektive des Arbeitsfahrzeugs 1 zu gewährleisten.

Jedes der hydraulischen Systeme 16, 17 umfasst jeweils eine Proportionaleinheit 18 und eine nachgeschaltete Sperreinheit 19 zur Beaufschlagung des Lenkzylinders 9 der weiteren lenkbaren Fahrzeugachse 4 mit Hydrauliköl. Zur Ansteuerung der hydraulischen Systeme 16, 17 sind zumindest drei unabhängige Steuereinheiten 20 bis 23 vorgesehen sind, von denen zwei Steuereinheiten 20, 21 das eine hydraulische System 16 ansteuern und die zumindest eine weitere Steuereinheit 22, 23 das andere hydraulische System 17 der elektrohydraulischen Lenkvorrichtung 11 ansteuert. Im dargestellten Ausführungsbeispiel weisen beide hydraulische Systeme 16, 17 jeweils zwei voneinander unabhängige Steuereinheiten 20, 21 bzw. 22, 23 auf. Die zumindest drei Steuereinheiten 20 bis 23 sind untereinander durch ein Kommunikationsmittel 30, vorzugsweise ein Bussystem 31, miteinander zum bidirektionalen Datenaustausch verbunden. Die zumindest drei Steuereinheiten 20 bis 23 haben zudem die Aufgabe einander zu überwachen.

Die Komponenten des jeweiligen hydraulischen Systems 16, 17, d.h. die Proportionaleinheit 18 und die nachgeschaltete Sperreinheit 19, können in separaten Gehäusen oder in einem gemeinsamen Gehäuse zusammengefasst sein. Des Weiteren können die dem jeweiligen hydraulischen System zugehörigen Steuereinheiten 20, 21 bzw. 22, 23 in unterschiedlichen Modulgehäusen 24, 25 angeordnet sein. Die Anordnung der dem jeweiligen hydraulischen System 16, 17 zugehörigen Steuereinheiten 20, 21 bzw. 22, 23 in unterschiedlichen Modulgehäusen 24, 25 ist vorteilhaft, um die zumindest drei unabhängigen Steuereinheiten 20 bis 23 mit zumindest zwei unabhängigen Spannungsquellen verbinden zu können. Die zumindest drei unabhängigen Steuereinheiten 20, 21 bzw. 22, 23 regeln den Lenkwinkel der weiteren Fahrzeugachse 4 in der jeweiligen Betriebssituation des Arbeitsfahrzeugs 1, d.h. im Betrieb des Arbeitsfahrzeugs 1 auf dem Feld bzw. abseits der Straße sowie bei der Straßenfahrt.

Die zumindest zwei lenkbaren Fahrzeugachsen 3, 4 umfassen jeweils zumindest drei voneinander unabhängige Winkelsensoreinrichtungen 26a, 26b; 27a, 27b; 28a, 28b; 29a, 29b. Die jeweiligen Winkelsensoreinrichtungen 28a, 28b; 29a, 29b sind dazu eingerichtet, einen Istlenkwinkel der durch das Orbitrol 10 gesteuerten Fahrzeugachse 3 zu erfassen. Die jeweiligen Winkelsensoreinrichtungen 26a, 26b; 27a, 27b an der weiteren Fahrzeugachse 4 sind dazu eingerichtet, einen Istlenkwinkel der durch die elektrohydraulische Lenkvorrichtung 11 gesteuerten weiteren lenkbaren Fahrzeugachse 4 zu erfassen. Die Winkelsensoreinrichtungen 26a, 26b; 27a, 27b; 28a, 28b; 29a, 29b übertragen ihre Signale an die Steuereinheiten 20, 21 bzw. 22, 23 zur Auswertung.

Die Steuereinheiten 20, 21 bzw. 22, 23 sind zur Bestimmung eines einzustellenden Solllenkwinkels der zumindest einen weiteren lenkbaren Fahrzeugachse 4 in Abhängigkeit von dem bestimmten Istlenkwinkel der durch das Orbitrol 10 gesteuerten Fahrzeugachse 3 eingerichtet. So können die Winkelsensoreinrichtungen 29a, 29b der durch das Orbitrol 10 gesteuerten Fahrzeugachse 3 an die Steuereinheiten 22, 23 der weiteren lenkbaren Fahrzeugachse 4 angeschlossen sein. Die Steuereinheiten 22, 23 der weiteren lenkbaren Fahrzeugachse 4 können die von den Winkelsensoreinrichtungen 29a, 29b der durch das Orbitrol 10 gesteuerten Fahrzeugachse 3 empfangenen Signale verwenden, um daraus einen Solllenkwinkel der zumindest einen weiteren lenkbaren Fahrzeugachse 4 zu berechnen. Die Steuereinheiten 20, 21 bzw. 22, 23 können über wenigstens eine in einer jeweiligen Speichereinheit hinterlegte Kennlinie den Solllenkwinkel der weiteren lenkbaren Fahrzeugachse 4 aus dem bestimmten Istlenkwinkel der durch das Orbitrol 10 gesteuerten Fahrzeugachse 3 ableiten. Somit kann die elektrohydraulische Lenkvorrichtung 11 die weitere Fahrzeugachse 4 zumindest nachlenken. Dazu werden die Lenkwinkel der durch das Orbitrol 10 gesteuerten Fahrzeugachse 3 aufgenommen. Mit dieser einfachen Variante ist eine Allradlenkung realisierbar, in welcher die zumindest eine weitere Fahrzeugachse 4 um die Geradeausstellung der primär gesteuerten Fahrzeugachse 3 herum nicht mitgelenkt wird. Da die elektrohydraulische Lenkvorrichtung 11 der weiteren Fahrzeugachse 4 jederzeit aktiv ist, kann ein Verriegeln bei einer Geradeausfahrt und die Korrektur von Lenkwinkelabweichungen im (hydraulisch) verriegelten Zustand entfallen.

Die Darstellung in Fig. 3 zeigt schematisch eine Weiterbildung des Lenksystems 7 des landwirtschaftlichen Arbeitsfahrzeugs 1. Das in Fig. 3 dargestellte Lenksystem 7 unterscheidet sich von dem in Fig. 2 dargestellten dadurch, dass die Steuereinheiten 20 bis 23 der hydraulischen Systeme 16, 17 mit einem übergeordneten Antriebsstrangsteuergerät 32 durch das Kommunikationsmittel 30 respektive Bussystem 31 verbunden sind. Hierbei kann das Antriebsstrangsteuergerät 32 Daten von einem Routenplanungssystem und/oder einem automatisches Spurführungssystem empfangen. Die Anbindung der Steuereinheiten 20 bis 23 an das übergeordnete Antriebsstrangsteuergerät 32 hat den Vorteil, dass zusätzliche Fahrdaten bereitgestellt werden können. Insbesondere sind die Steuereinheiten 20 bis 23 zum Empfang von Fahrgeschwindigkeitsinformationen eingerichtet. Die Steuereinheiten 20 bis 23 können dazu eingerichtet sein, die Fahrgeschwindigkeitsinformationen für Maßnahmen zur Erhöhung der Fahrstabilität zu nutzen. Als wesentliche Maßnahme zur Erhöhung der Fahrstabilität kann eine Limitierung des maximalen Lenkwinkels an der weiteren lenkbaren Fahrzeugachse 4 in Abhängigkeit von der Fahrgeschwindigkeit vorgesehen sein. So können die Steuereinheiten 20 bis 23 dazu eingerichtet sein, einen die Fahrstabilität berücksichtigenden Maximalwert für den Solllenkwinkel für die durch die elektrohydraulische Lenkvorrichtung 11 gesteuerte weitere lenkbare Fahrzeugachse 4 zu berechnen. Dabei werden fahrgeschwindigkeitsabhängig die Einschlagswinkel der Bodeneingriffsmittel 5 der weiteren lenkbaren Fahrzeugachse 4 begrenzt.

Weiterhin können die Steuereinheiten 20 bis 23 durch ein Kommunikationsmittel wie eine Signalleitung 33 unmittelbar mit einer Fahrgeschwindigkeitsbestimmungsvorrichtung 34 verbunden sein. Die Fahrgeschwindigkeitsbestimmungsvorrichtung 34 kann als ein Drehzahlsensor ausgeführt sein. Beispielweise kann der Drehzahlsensor eine Abtriebsdrehzahl am Getriebeausgang eines Getriebes des Traktors 2 erfassen, welche über die Signalleitung 33 an die Steuereinheiten 20 bis 23 zur Auswertung übertragen wird.

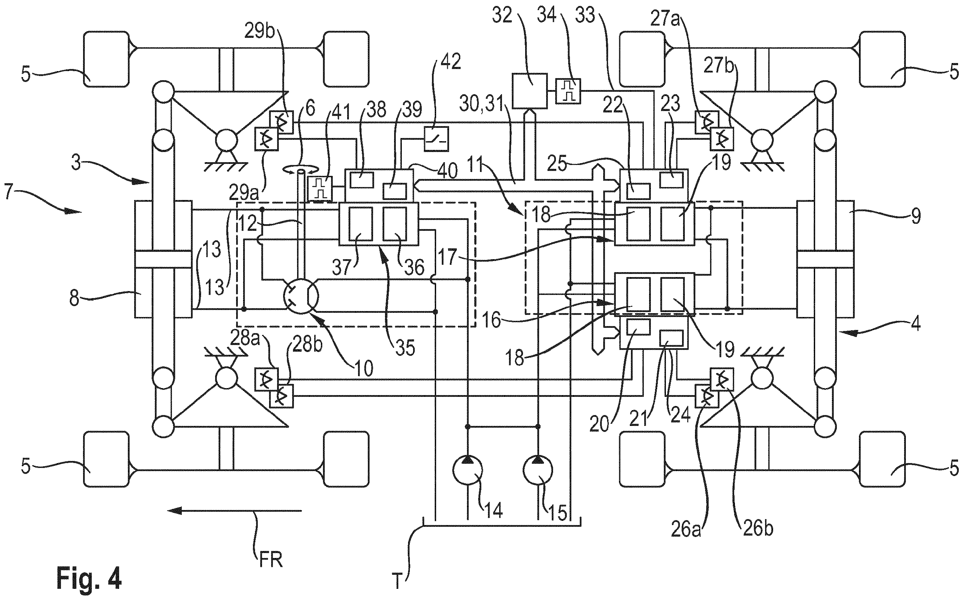

In Fig. 4 ist schematisch das Lenksystem 7 des landwirtschaftlichen Arbeitsfahrzeugs 1 gemäß einer weiteren Ausführungsform dargestellt. Die in Fig. 4 gezeigte Darstellung des Lenksystems 7 stellt eine Weiterbildung des anhand der Fig. 2 und 3 beschriebenen Lenksystems 7 dar. Gemäß dieser Weiterbildung ist vorgesehen, dass der durch das Orbitrol 10 gesteuerten primär zu lenkenden Fahrzeugachse 3 ein Hydrauliksystem 35 zur automatischen Lenkung des landwirtschaftlichen Arbeitsfahrzeugs 1 bei einer Arbeits- oder Feldfahrt abseits öffentlicher Straßen zugeordnet ist.

Das der durch das Orbitrol 10 gesteuerten Fahrzeugachse 3 zugeordnete Hydrauliksystem 35 umfasst eine Proportionaleinheit 36 und eine nachgeordnete Sperreinheit 37. Der Aufbau des Hydrauliksystem 35 kann dem der hydraulischen System 16, 17 entsprechen. Zur Ansteuerung des Hydrauliksystems 35 bzw. dessen Komponenten sind zwei voneinander unabhängige Steuereinheiten 38, 39 vorgesehen. Die zwei unabhängigen Steuereinheiten 38, 39 sind optional als separate Steuereinheiten des Hydrauliksystems der durch das Orbitrol 10 gesteuerten Fahrzeugachse 3 ausgeführt. Alternativ können die Steuerungsaufgaben der zwei unabhängigen Steuereinheiten 38, 39 von den Steuereinheiten 20, 21; 22,23 zumindest eines der hydraulischen Systeme 16, 17 der elektrohydraulischen Lenkvorrichtung 11 übernommen werden. Die zwei unabhängigen Steuereinheiten 38, 39 sind in einem gemeinsamen Modulgehäuse 40 angeordnet. Ein der Lenkwelle 12 zugeordneter Lenkradgeber 41 bzw. Drehmelder überträgt seine Signale an die Steuereinheiten 38, 39 zur Auswertung. Das Orbitrol 10 und das Hydrauliksystem 35 können in einem gemeinsamen Gehäuse angeordnet sein.

Die von dem Lenkradgeber 41 bzw. Drehmelder unmittelbar an die Steuereinheiten 38, 39 zur Auswertung übertragenen Signale können von den Steuereinheiten 38, 39 den weiteren Steuereinheiten 20 bis 23 der hydraulischen Systeme 16, 17 über das Bussystem 31 zur Verfügung gestellt werden, wenn keine signaltechnische Anbindung des Lenkradgebers 41 bzw. Drehmelders an die Steuereinheiten 20 bis 23 besteht.

Die in Fig. 4 dargestellte Weiterbildung des Lenksystems 7 sieht mit (Feld-) Arbeitsfahrt und Straßenfahrt zwei Betriebsmodi vor. Parallel zum Orbitrol 10 wird das Hydrauliksystem 35 eingesetzt, welches eine Verstellung der primär gelenkten Fahrzeugachse 3 auch ohne Betätigung des Lenkrades 6 ermöglicht. Das Drehen am Lenkrad 6 wird durch den Lenkradgeber 41 detektiert, so dass der Fahrer jederzeit die Kontrolle über die primär gelenkte Fahrzeugachse 3 zurückerlangen kann. Mittels des Hydrauliksystems 35 lassen sich im (Feld-) Arbeitsmodus Lenkwinkel für ein automatisches Lenken durch ein automatisches Lenksystem vorgeben, aber auch Versatzwinkel einprägen, die einen Hundegang des Arbeitsfahrzeugs 1 oder andere Lenkprogramme ermöglichen. Weiterhin kann das Hydrauliksystem 35 die Ölförderung des Orbitrols 10 variabel unterstützen, was die situationsabhängige Einstellung einer geeigneten Lenkübersetzung vom Lenkrad 6 zur Fahrzeugachse 3 ermöglicht.

Zur Aktivierung bzw. Deaktivierung des Hydrauliksystems 35 kann ein Betätigungselement 42, insbesondere ein Straßenfahrschalter, vorgesehen sein. Durch das Betätigen des Betätigungselementes 42 wird vom Betriebsmodus Straßenfahrt auf den Betriebsmodus (Feld-) Arbeitsfahrt umgeschaltet, womit eine Aktivierung des Hydrauliksystems einhergehen kann. Entsprechend wird bei einem Umschalten vom Betriebsmodus (Feld-) Arbeitsfahrt auf Straßenfahrt das Hydrauliksystem 35 deaktiviert. Die Aufteilung in die Betriebsmodi (Feld-) Arbeitsfahrt und Straßenfahrt ermöglicht eine einfache Systemarchitektur des Lenksystems 7.

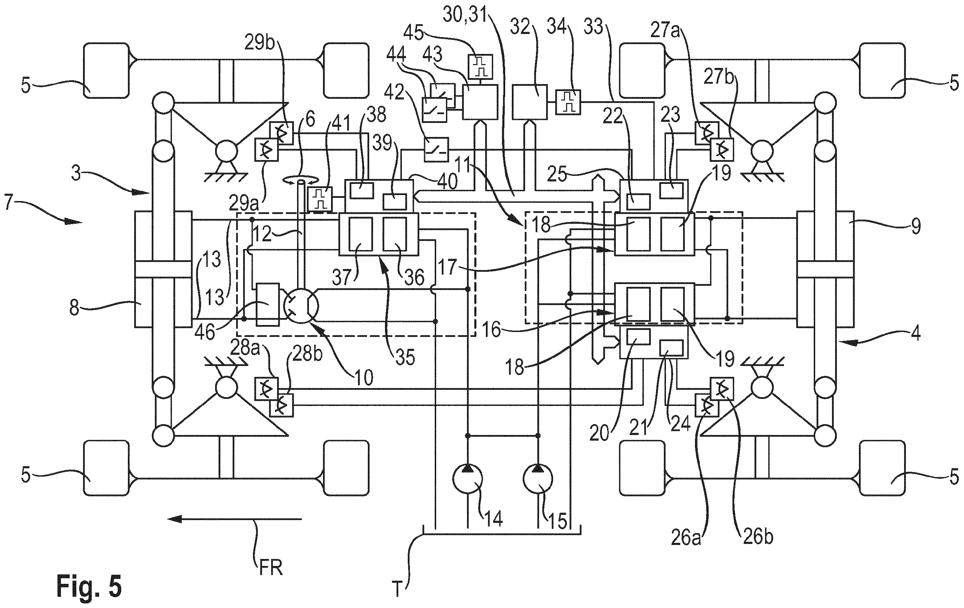

Die Darstellung in Fig. 5 zeigt schematisch das Lenksystem 7 des landwirtschaftlichen Arbeitsfahrzeugs 1 gemäß einer weiteren Ausführungsform. Die Funktionalität des Lenksystems 7 gemäß Fig. 5 wird gegenüber der in Fig. 4 beschriebenen Ausführungsform dahingehend erweitert, dass Sonderlenkprogramme wie "Schongang", "Hundegang", "Synchronlenkung" oder "Fahrhebellenkung" unterstützt werden können.

Um eine unabhängige Verstellung der Lenkwinkel von primär gelenkter Fahrzeugachse 3 und der weiteren gelenkten Fahrzeugachse 4 im Betriebsmodus (Feld-) Arbeitsfahrt zu erlauben, kann das Lenksystem ein übergeordnetes Steuerungsmodul 43 aufweisen. Das Steuerungsmodul 43 ist dazu eingerichtet, die Lenkwinkel von primär zu lenkender Fahrzeugachse und der mindestens einen weiteren zu lenkenden Fahrzeugachse unabhängig voneinander einzustellen Gemäß der Darstellung in Fig. 5 ist das Steuerungsmodul 43 als eine separate Einheit ausgeführt und durch das Bussystem 31 mit den weiteren Steuereinheiten 20 bis 23, 38, 39 des Lenksystems 7 verbunden. Alternativ dazu kann die Funktion des Steuerungsmoduls 43 aber auch in einer der Steuereinheiten 20 bis 23, 38, 39 integriert sein.

An das Steuerungsmodul 43 können weitere Bedienelemente 44 des Lenksystems 7 angeschlossen sein. Die Bedienelemente 44 sind beispielhaft als Schaltersymbole dargestellt. Es können jedoch auch andere Bedienelemente 44 mit anderen Signalformen verwendet werden, die für den Anschluss an das Steuerungsmodul 43 genutzt werden. Beispielsweise kann ein Bedienelement 44 als Fahrhebel ausgeführt sein, welcher pulsweitenmodulierte Signale bereitstellt.

Mit Hilfe dieser Bedienelemente lässt sich beispielsweise ein Hundegangwinkel vorgeben, der eine Fortbewegung in Diagonalfahrt ermöglicht. Einige weitere Lenkprogramme lassen sich mit vollelektronischer Lenkung im Betriebsmodus (Feld-) Arbeitsfahrt darstellen. Das Steuerungsmodul 43 liest vorteilhafterweise weitere Kanäle eines Lenkradgebers 45 ein und nutzt die über das Bussystem 31 empfangenen Daten des anderen Lenkradgebers 41 zur Plausibilisierung. Damit sich das Lenkrad 6 im vollelektronischen Lenkmodus bei Erreichen eines Lenkanschlags des Lenkzylinders 8 weiterdrehen kann, wird ein Ventilblock 46 zwischen dem Orbitrol 10 und der primär gelenkten Fahrzeugachse 3 eingesetzt, welcher die Hydraulikleitungen 13 in diesem Fall sperrt und dafür den Volumenstrom des Orbitrols 10 kurzschließt. Auch dieser Ventilblock 46 kann in ein gemeinsames Gehäuse des Orbitrols 10 und des Hydrauliksystems 35 integriert sein oder einen eigenen, vom dem Orbitrol 10 getrennten Block darstellen.

Gemäß der in Fig. 5 dargestellten Weiterbildung wird das Signal des Betätigungselementes 42 wie des Straßenfahrtschalters von der elektrohydraulischen Lenkvorrichtung 11 zur Lenkung der weiteren Fahrzeugachse 4 eingelesen. Steuerbefehle des übergeordneten Steuerungsmodul 43 werden bei der Fahrt auf der Straße von den Steuereinheiten 20 bis 23 der elektrohydraulischen Lenkvorrichtung 11 ignoriert. Fig. 5 zeigt die Möglichkeit der Steuereinheiten 38, 39, auch einen zweiten Kanal eines der Lenkwinkelgeber 29a, 29b an der Fahrzeugachse 3 einzulesen.

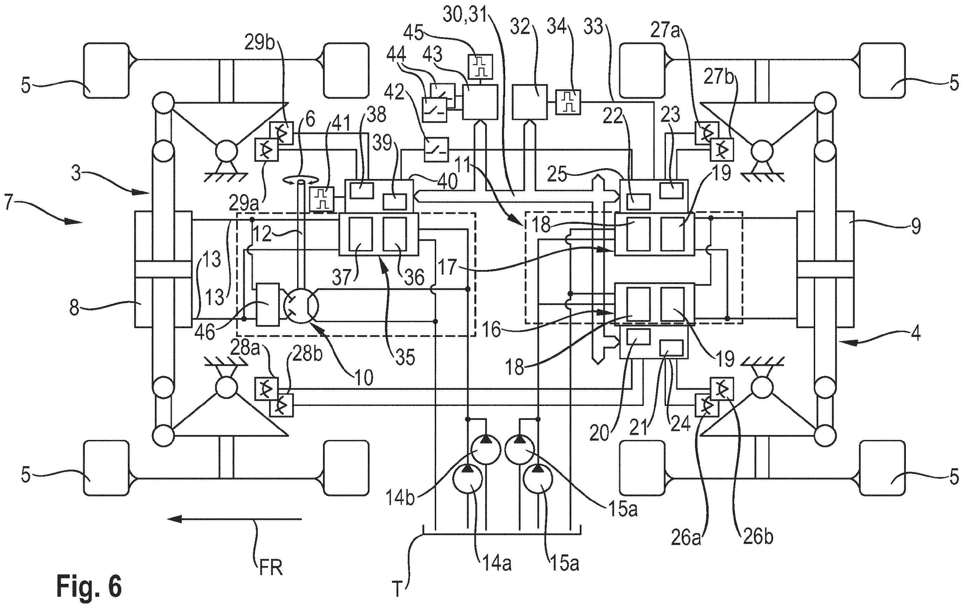

In Fig. 6 ist schematisch das Lenksystem 7 des landwirtschaftlichen Arbeitsfahrzeugs 1 gemäß einer weiteren Ausführungsform dargestellt. Der Aufbau entspricht dabei dem des anhand der Fig. 5 beschriebenen Lenksystems 7. Gemäß dieser Weiterbildung ist vorgesehen, dass das Orbitrol 10 zur Ansteuerung des Lenkzylinders 8 der primär gelenkten Fahrzeugachse 3 und die elektrohydraulische Lenkvorrichtung 11 zur Ansteuerung des Lenkzylinders 9 der zumindest einen weiteren gelenkten Fahrzeugachse 4 hydraulisch getrennt voneinander betrieben werden können. Hierzu ist vorgesehen, dass sowohl dem Orbitrol 10 als auch der die elektrohydraulischen Lenkvorrichtung 11 jeweils zwei Hydraulikpumpen 14a, 15a und 14b, 15b, jeweils eine Hauptlenkpumpe sowie eine Notlenkpumpe, zugeordnet sind, um diese mit Hydrauliköl zu versorgen. Insbesondere ist dies in den Fällen vorteilhaft, in denen für eine Lenkung mehr Ölvolumen bereitgestellt werden muss, als eine einzelne motorgetriebene Hauptlenkpumpe alleine liefern könnte. Durch die Verwendung von zwei kleinen Hydraulikpumpen 14a, 15a als Hauptlenkpumpen anstelle einer größeren gemeinsamen Hydraulikpumpe 14 lässt sich die energetische Effizienz des Lenksystems 7 steigern. Der energetische Vorteil ergibt sich, da bei den meisten Lenkmanövern nur eine der beiden Fahrzeugachsen 3, 4 eine hohe Lenkarbeit verrichten muss und nur deren Hydraulikpumpe 14a oder 15a als Hauptlenkpumpe auf einem erhöhten Druckniveau arbeiten muss.

**Bezugszeichenliste**

| | | | |
|---|---|---|---|
| 1 | Arbeitsfahrzeug | 27b | Winkelsensoreinrichtung |
| 2 | Traktor | 28a | Winkelsensoreinrichtung |
| 3 | Fahrzeugachse | 28b | Winkelsensoreinrichtung |
| 4 | Fahrzeugachse | 29a | Winkelsensoreinrichtung |
| 5 | Bodeneingriffsmittel | 29b | Winkelsensoreinrichtung |
| 6 | Lenkrad | 30 | Kommunikationsmittel |
| 7 | Lenksystem | 31 | Bussystem |
| 8 | Lenkzylinder | 32 | Antriebsstrangsteuergerät |
| 9 | Lenkzylinder | 33 | Kommunikationsmittel |
| 10 | Orbitrol | 34 | Fahrgeschwindigkeitsbestimmungsvor- |
| | | | richtung |
| 11 | Elektrohydraulische Lenkvorrichtung | 35 | Hydrauliksystem |
| 12 | Lenkwelle | 36 | Proportionaleinheit |
| 13 | Hydraulikleitunen | 37 | Sperreinheit |
| 14 | Hydraulikpumpe | 38 | Steuereinheit |
| 14a | Hydraulikpumpe | 39 | Steuereinheit |
| 14b | Hydraulikpumpe | 40 | Modulgehäuse |
| 15 | Hydraulikpumpe | 41 | Lenkradgeber |
| 15a | Hydraulikpumpe | 42 | Betätigungselement |
| 15b | Hydraulikpumpe | 43 | Steuerungsmodul |
| 16 | Hydraulisches System | 44 | Bedienelement |
| 17 | Hydraulisches System | 45 | Lenkradgeber |
| 18 | Proportionaleinheit | 46 | Ventilblock |
| 19 | Sperreinheit | | |
| 20 | Steuereinheit | FR | Vorzugsfahrtrichtung |
| 21 | Steuereinheit | T | Tank |
| 22 | Steuereinheit | | |
| 23 | Steuereinheit | | |
| 24 | Modulgehäuse | | |
| 25 | Modulgehäuse | | |
| 26a | Winkelsensoreinrichtung | | |
| 26b | Winkelsensoreinrichtung | | |
| 27a | Winkelsensoreinrichtung | | |

## Patentansprüche

1. Lenksystem (7) für ein landwirtschaftliches Arbeitsfahrzeug (1, 2), umfassend zumindest zwei lenkbare Fahrzeugachsen (3, 4), die jeweils zumindest einen Lenkzylinder (8, 9) zur Lenkung von an den Fahrzeugachsen (3, 4) angeordneten Bodeneingriffsmitteln (5) aufweisen, wobei die primär zu lenkende Fahrzeugachse (3) durch ein Orbitrol (10) gesteuert ist und die zumindest eine weitere lenkbare Fahrzeugachse (4) durch eine elektrohydraulische Lenkvorrichtung (11), **dadurch gekennzeichnet, dass** die elektrohydraulische Lenkvorrichtung (11) der zumindest einen weiteren lenkbaren Fahrzeugachse (4) redundant ausgeführt ist.

2. Lenksystem (7) nach Anspruch 1, **dadurch gekennzeichnet, dass** die elektrohydraulische Lenkvorrichtung (11) aus zwei redundanten hydraulischen Systemen (16, 17) besteht, welche vom Orbitrol (10) hydraulisch unabhängig sind.

3. Lenksystem (7) nach Anspruch 1 oder 2, **dadurch gekennzeichnet, dass** zumindest zwei redundant arbeitende Hydraulikpumpen (14, 15; 14a, 14b, 15a, 15b) zur Versorgung von Orbitrol (10) und der elektrohydraulischen Lenkvorrichtung (11) vorgesehen sind.

4. Lenksystem (7) nach Anspruch 2 oder 3, **dadurch gekennzeichnet, dass** die hydraulischen Systeme (16, 17) jeweils eine Proportionaleinheit (18) und eine nachgeschaltete Sperreinheit (19) zur Beaufschlagung des zumindest einen Lenkzylinders (9) der zumindest einen weiteren lenkbaren Fahrzeugachse (4) umfassen.

5. Lenksystem (7) nach einem der Ansprüche 2 bis 4, **dadurch gekennzeichnet, dass** zur Ansteuerung der hydraulischen Systeme (16, 17) zumindest drei unabhängige Steuereinheiten (20, 21, 22, 23) vorgesehen sind, von denen zwei Steuereinheiten (20, 21) das eine hydraulische System (16) ansteuern und die zumindest eine weitere Steuereinheit (22, 23) das andere hydraulische System (17) der elektrohydraulischen Lenkvorrichtung (11) ansteuert.

6. Lenksystem (7) nach Anspruch 5, **dadurch gekennzeichnet, dass** die zumindest drei unabhängigen Steuereinheiten (20, 21, 22, 23) mit zumindest zwei unabhängigen Spannungsquellen verbunden sind.

7. Lenksystem (7) nach einem der Ansprüche 2 bis 6, **dadurch gekennzeichnet, dass** die zumindest zwei lenkbaren Fahrzeugachsen (3, 4) jeweils zumindest drei voneinander unabhängige Winkelsensoreinrichtungen (28a, 28b, 29a, 29b) umfassen, wobei die jeweiligen Winkelsensoreinrichtungen (28a, 28b, 29a, 29b) dazu eingerichtet sind, einen Istlenkwinkel der durch das Orbitrol (10) gesteuerten Fahrzeugachse (3) sowie einen Istlenkwinkel der durch die elektrohydraulische Lenkvorrichtung (11) gesteuerten zumindest einen weiteren lenkbaren Fahrzeugachse (4) zu erfassen.

8. Lenksystem (7) nach Anspruch 7, **dadurch gekennzeichnet, dass** die Steuereinheiten (20, 21, 22, 23) zur Bestimmung eines einzustellenden Solllenkwinkels der zumindest einen weiteren lenkbaren Fahrzeugachse (4) in Abhängigkeit von dem Istlenkwinkel der durch das Orbitrol (3) gesteuerten Fahrzeugachse (3) eingerichtet sind.

9. Lenksystem (7) nach einem der Ansprüche 4 bis 8, **dadurch gekennzeichnet, dass** die Steuereinheiten (20, 21, 22, 23) der hydraulischen Systeme (16, 17) untereinander durch ein Kommunikationsmittel (30) verbunden sind.

10. Lenksystem (7) nach einem der Ansprüche 4 bis 9, **dadurch gekennzeichnet, dass** die Steuereinheiten (20, 21, 22, 23) der hydraulischen Systeme (16, 17) mit einem übergeordneten Antriebsstrangsteuergerät (32) durch ein Kommunikationsmittel (30) verbunden sind.

11. Lenksystem (7) nach einem der Ansprüche 4 bis 10, **dadurch gekennzeichnet, dass** die Steuereinheiten (20, 21, 22, 23) der hydraulischen Systeme (16, 17) durch ein Kommunikationsmittel (33) mit einer Fahrgeschwindigkeitsbestimmungsvorrichtung (34) verbunden sind.

12. Lenksystem (7) nach einem der vorangehenden Ansprüche, **dadurch gekennzeichnet, dass** der durch das Orbitrol (10) gesteuerten Fahrzeugachse (3) ein Hydrauliksystem (35) zur automatischen Lenkung zugeordnet ist.

13. Lenksystem (7) nach einem der vorangehenden Ansprüche, **dadurch gekennzeichnet, dass** das Hydrauliksystem (35) eine Proportionaleinheit (36) und eine nachgeordnete Sperreinheit (37) umfasst, zu deren Ansteuerung zwei voneinander unabhängige Steuereinheiten (38, 39) vorgesehen sind, wobei die zwei unabhängigen Steuereinheiten (38, 39) als separate Steuereinheiten des Hydrauliksystems (35) der durch das Orbitrol (10) gesteuerten Fahrzeugachse (3) oder als eine der Steuereinheiten (20, 21, 22, 23) zumindest eines der hydraulischen Systeme (16, 17) der elektrohydraulischen Lenkvorrichtung (11) ausgeführt sind.

14. Lenksystem (7) nach einem der vorangehenden Ansprüche, **dadurch gekennzeichnet, dass** ein Steuerungsmodul (43) vorgesehen ist, welches dazu eingerichtet ist, die Lenkwinkel von der primär zu lenkender Fahrzeugachse (3) und der mindestens einen weiteren zu lenkenden Fahrzeugachse (4) unabhängig voneinander einzustellen.

15. Lenksystem (7) nach einem der vorangehenden Ansprüche, **dadurch gekennzeichnet, dass** jeder Fahrzeugachse (3, 4) jeweils zwei redundant arbeitende Hydraulikpumpen (14a, 15a; 14b, 15b) zugeordnet sind, wobei das jeweilige Hydraulikpumpenpaar (14a, 15a; 14b, 15b) der hydraulischen Versorgung jeweils nur einer der lenkbaren Fahrzeugachse (3, 4) dient.
